Europäisches Patentamt

European Patent Office

Office européen des brevets

(19)

(11) Numéro de publication : **0 353 511 B1**

# (12) FASCICULE DE BREVET EUROPEEN

(45) Date de publication du fascicule du brevet :
**11.09.91 Bulletin 91/37**

(51) Int. Cl.$^5$ : **B29D 30/34, B60C 9/02**

(21) Numéro de dépôt : **89112804.3**

(22) Date de dépôt : **13.07.89**

(54) Eléments constitutifs d'un appareil de fabrication d'un renforcement pour pneumatique.

(30) Priorité : **05.08.88 FR 8810770**

(43) Date de publication de la demande :
**07.02.90 Bulletin 90/06**

(45) Mention de la délivrance du brevet :
**11.09.91 Bulletin 91/37**

(84) Etats contractants désignés :
**AT BE CH DE ES FR GB GR IT LI LU NL SE**

(56) Documents cités :
**EP-A- 0 009 018
EP-A- 0 243 851
WO-A-83/02749
DE-B- 1 291 112**

(73) Titulaire : **MICHELIN & CIE (Compagnie Générale des Etablissements Michelin) Société dite:
4 rue du Terrail
F-63000 Clermont-Ferrand (FR)**

(72) Inventeur : **Deal, Michel
23, Lot Les Grands-Champs
Vendat F-03110 Escurolles (FR)**

(74) Mandataire : **Bauvir, Jacques et al
Michelin & Cie Service K. Brevets
F-63040 Clermont-Ferrand Cédex (FR)**

## Description

La présente invention concerne un appareil de fabrication d'un renforcement pour pneumatiques. Elle se rapporte au type d'appareil décrit dans la demande de brevet EP-A-243851.

Un tel appareil est destiné à la fabrication de renforcements pour pneumatiques à partir d'un seul fil. Parmi les organes essentiels, cet appareil comporte des moyens de retenue du fil, portés par des leviers désignés par le terme "bras de support" dans la demande de brevet EP-A-243851. Cet appareil comporte aussi des moyens de présentation du fil aux moyens de retenue. Dans les exemples décrits, ces moyens de présentation sont constitués par un bras rotatif assurant le dévidage et l'accrochage de fil aux moyens de retenue ; les moyens de retenue du fil sont constitués par une paire de crochets et le dévidage du fil est assuré à partir d'un orifice situé à l'extrémité du bras rotatif.

Le but de la présente invention est de proposer d'autres moyens de présentation du fil aux moyens de retenue.

Selon l'invention, l'appareil de fabrication d'un renforcement pour pneumatiques, ledit renforcement étant constitué à partir d'un seul fil, ledit appareil étant du type comportant deux couronnes coaxiales de leviers dont l'extrémité porte des moyens de retenue du fil, et comportant les moyens de présentation du fil auxdits moyens de retenue, est caractérisé en ce que lesdits moyens de présentation comportent une tête de présentation accrochée à un brin flexible, sans fin, ledit brin étant monté sur au moins deux roues de guidage dont l'axe de rotation est perpendiculaire à l'axe des couronnes, lesdites roues étant disposées au voisinage des moyens de retenue, et en ce qu'ils comportent un orifice amenant ledit fil sensiblement dans le plan dudit brin.

Pour la connaissance du principe de fabrication mis en oeuvre dans la présente invention, ainsi que pour la configuration générale de l'appareil de fabrication, il convient de se reporter à la demande de brevet EP 243851 précitée, de même que pour la description de tous les moyens non spécifiques de la présente invention.

Les figures suivantes permettent de bien comprendre la présente invention.

La figure 1 montre l'implantation générale des moyens de présentation sur un appareil du type concerné.

Les figures 2 et 3 montrent en détail l'interaction entre moyens de présentation et moyens de retenue pour la couronne de droite à la figure 1.

Les figures 4 et 5 montrent le même détail pour la couronne de gauche à la figure 1.

La figure 6 montre un raidissement pour un composant des moyens de présentation.

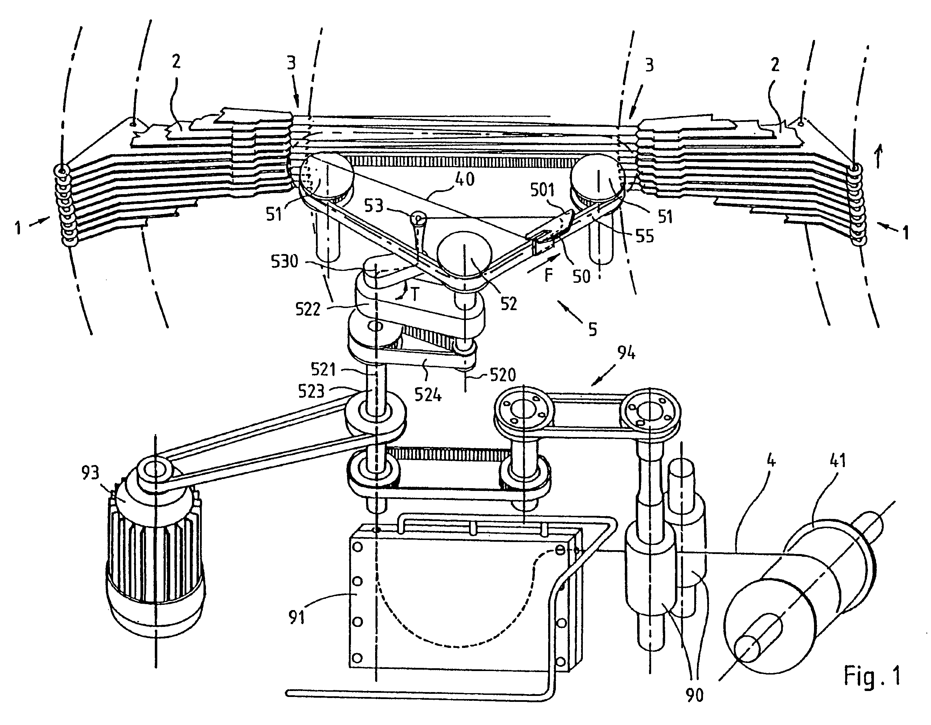

A la figure 1 et pour mémoire, en suivant le cheminement du fil 4, on trouve une bobine 41 de fil 4, puis deux rouleaux 90 imposant la vitesse de déroulement du fil 4, ladite vitesse correspondant à la consommation moyenne du fil 4. On trouve ensuite un système 91 de compensation de longueur assurant une tension du fil sensiblement constante. L'ensemble des organes de dévidage du fil 4 et d'accrochage aux moyens de retenue est entraîné par un seul moteur 93 et par des chaînes cinématiques adéquates 94.

Le fil 4 aboutit aux moyens de présentation 5 qui l'accrochent aux moyens de retenue, ici des crochets 3, portés par des leviers 2 disposés en deux couronnes 1.

Les moyens de présentation comportent une tête de présentation 50. Pour commander le mouvement de la tête de présentation 50, on utilise un brin souple capable de transmettre le mouvement nécessaire, par exemple une courroie 55, crantée pour assurer une parfaite synchronisation entre le mouvement des moyens de présentation 5 et la rotation des deux couronnes 1. De façon générale, le brin souple doit avoir une résistance à la torsion suffisante pour contenir à l'intérieur de limites tolérables le basculement provoqué par la tête de présentation 50 (plus exactement par l'action du fil 4 sur la tête de présentation 50). On pourrait utiliser deux câbles en parallèle, montés avec un écart suffisant. On pourrait aussi utiliser une chaîne.

La courroie 55 porte une tête de présentation 50 au travers de laquelle passe le fil 4, venant d'un point d'alimentation constitué par un orifice 53. La courroie 55 crantée est montée sur deux poulies de guidage 51 faisant office de roues de guidage pour la courroie crantée. Lesdites poulies de guidage 51 sont disposées à proximité des crochets 3, de façon à ce que la tête de présentation 50 qui est un organe mince, aplati, puisse passer entre deux crochets 3 adjacents. Les leviers 2 supportant les crochets 3 étant disposés dans un plan passant par l'axe desdites couronnes 1, on dispose les organes de présentation de façon à ce que la tête de présentation 50 elle-même se dispose sensiblement à la bissectrice des deux crochets 3 adjacents séparés par ladite tête de présentation 50 lors de son passage. Ces considérations dictent l'orientation des poulies de guidage 51, dont l'axe est perpendiculaire à l'axe des couronnes 1.

L'avantage de cette disposition, par rapport au bras rotatif décrit dans la demande de brevet précitée, réside dans un plus faible espace requis pour permettre le mouvement, surtout pour des écarts entre crochets 3 importants. Les organes de présentation 5 à courroie 55 décrits ici ne pénètrent que fort peu à l'intérieur du cylindre théorique enveloppant les moyens de retenue, c'est-à-dire le cylindre formé par le fil 4 lorsqu'il est accroché à tous les crochets 3. Donc le noyau rigide sur et autour duquel on va rabattre les fils 4 de renforcement peut déjà se trouver à sa position médiane entre les couronnes pendant que l'on exécute la phase d'accrochage aux moyens de retenue.

Si l'on veut que l'appareil construit puisse fabriquer plusieurs dimensions différentes des pneumatiques, ou plus précisément des pneumatiques requérant différentes longueurs de fils 4 d'une tringle à l'autre, il faut que l'on puisse faire varier l'écart entre deux couronnes 1, donc l'écart entre deux poulies de guidage 51. Dans ce cas, on monte la courroie 55 également sur une ou plusieurs poulies de tension 52 que l'on peut rapprocher de l'axe des couronnes, ou l'en écarter, selon que l'on augmente l'écart entre poulies de guidage 51 ou qu'on le diminue.

A la figure 1, on voit que la poulie de tension 52 est motorisée et imprime le mouvement de la courroie 55. Pour assurer la tension nécessaire de ladite courroie 55, l'axe 520 de la poulie de tension 52 peut tourner autour d'un axe 521. Le mouvement de tension est communiqué par le bras 522 qui tourne autour de l'axe 521 pour commander le déplacement de l'axe 520 (flèche T). La poulie de tension 52 est entraînée en rotation par l'arbre 523 monté dans l'axe 521 via une courroie de motorisation 524. L'arbre 523 est lui-même entraîné par le moteur 93.

Le fil 4 est délivré par un orifice 53. Pour éviter les croisements de fils 4 dans le renforcement (carcasse de pneumatique) finalement réalisé, cet orifice 53 doit se situer à l'intérieur de la boucle formée par la courroie 55. Il faut permettre au brin 40 de fil 4 apparaissant entre un crochet 3 de la couronne 1 de gauche à la figure 1 et la tête de présentation 50 de passer au dessus de l'orifice 53, qui est donc disposé approximativement dans le plan de la boucle formée par la courroie 55, au dessous de la tête de présentation 50.

Il faut noter que la tête de présentation 50 est déportée latéralement par rapport à la courroie 55, c'est-à-dire ni vers l'intérieur de la boucle, ni vers l'extérieur de la boucle, mais sur l'un de ses côtés, à savoir le côté supérieur à la figure 1. De ce côté de la courroie 55 et des poulies 51 et 52, à l'intérieur de la zone balayée par la tête de présentation 50, l'espace ne doit pas comporter d'autres obstacles que les crochets 3 auxquels le fil 4 est présenté pour y être accroché.

L'orifice 53 est monté sur une tige 530 en rotation autour de l'axe 521, et perpendiculaire à ladite tige 530. La tige 530 et le bras 522 forment un angle constant. Le fil 4 chemine depuis le système 91 de compensation de longueur jusqu'à ladite tige 530 exactement sur l'axe 521, donc à l'intérieur de l'arbre 523.

Cette disposition particulière, assurant la solidarisation mécanique de l'orifice 53 avec le bras 522 assurant le mouvement de la poulie de tension 52, n'est pas impérative mais on a observé que cela minimise la longueur de fil 4 que le système de compensation 91 doit nécessairement ravaler à un moment du cycle parcouru par les moyens de présentation, et ceci quel que soit le réglage de l'écartement entre les poulies de guidage 51.

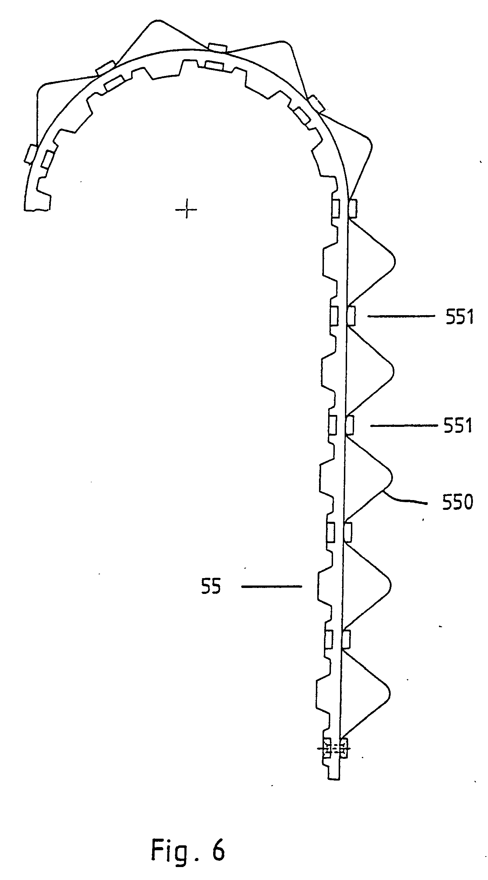

La figure 6 présente une variante d'exécution de la courroie 55. Celle-ci se trouve renforcée par un feuillard 550 plié en zig-zag, accroché à la courroie localement par ses pointes 551. La torsion de la courroie 55 autour de sa fibre médiane s'en trouve limitée, sans compromettre son enroulement autour des poulies 51, 52. Même si ce renforcement s'avère souhaitable, il n'est pas nécessaire de rigidifier toute la longueur de la courroie 55 : une longueur correspondant à l'écartement maximal possible entre les poulies de guidage 52 suffit puisque cela correspond au plus grand chemin le long duquel la courroie 55 n'est pas supportée. De toutes façons, la tête de présentation 50 est toujours fermement maintenue au moment où elle doit coopérer avec les crochets 3 puisqu'on dispose les poulies de guidage 52 pour que, à ce moment, la tête de présentation 50 passe sur cesdites poulies de guidage 52.

L'exécution détaillée de la tête de pose 50, et plus encore celle des crochets 3, dépend du type de fil 4 utilisé, fil au sens le plus général : fil unitaire ou câblé. L'exécution détaillée des crochets 3 dépend aussi du type de fil 4 utilisé, et plus encore du type d'ancrage du renforcement dans le futur pneumatique. Il faut donc garder à l'esprit que la suite de la description comporte des précisions dictées par l'utilisation, non limitative, de fil 4 en rayonne pour fabriquer une armature de carcasse radiale pour pneumatique de tourisme.

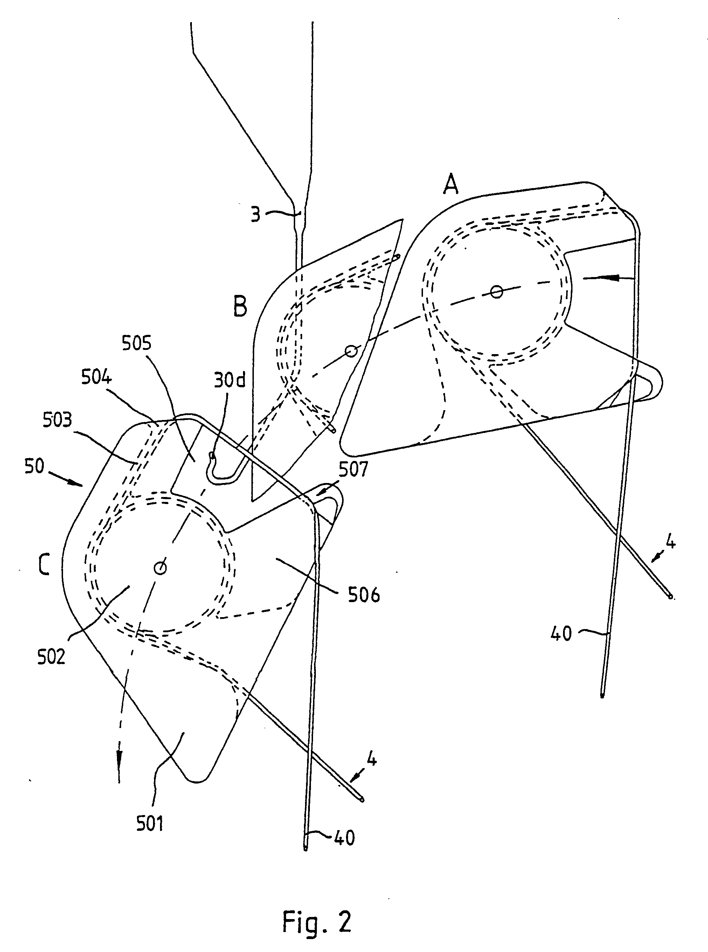

La tête de présentation 50 comporte, d'avant en arrière par référence à son déplacement imposé par la courroie 55, et symbolisée par F à la figure 1, une pointe 501, une poulie de renvoi 502, une buse 503 éloignant de ladite poulie de renvoi 502 l'extrémité 504 où le fil 4 est libéré de la tête de présentation 50. De cette façon, on crée un évidement 505 entre la poulie de renvoi 502 et le brin 40 du fil 4 quittant la tête de présentation 50 (voir figures 2 à 5).

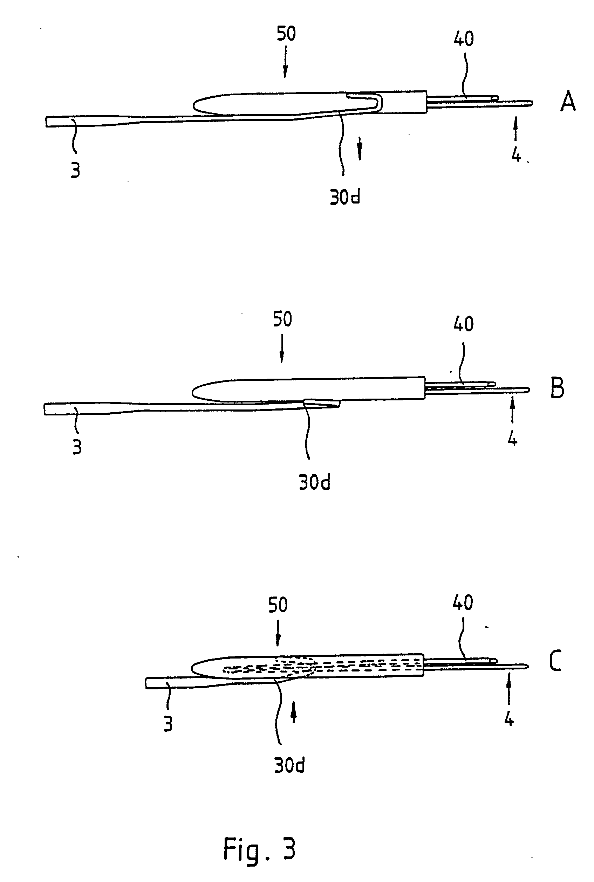

Pour présenter le fil 4 aux crochets 3, la tête de présentation 50 pénètre à l'intérieur du cylindre, défini par l'ensemble des crochets 3 des deux couronnes, pour la couronne 1 de droite à la figure 1, alors qu'elle sort du même cylindre pour la couronne 1 de gauche. Ladite tête 50 passe entre le dernier crochet 3 sur lequel le fil 4 a été accroché au tour précédent de la courroie 55 et le premier crochet 3 encore libre, ceci à la couronne 1 de droite, alors que ladite tête 50 passe entre les deux premiers crochets 3 encore libres à la couronne 1 de gauche. Ces choix constructifs dictent la forme précise des crochets 3 et de la tête 50. Ainsi, la tête 50 comporte une protubérance 506 supportant une encoche 507 pour, du côté de la couronne 1 de droite, mieux éloigner le brin 40 de la poulie de renvoi 502. Le rôle de cette disposition apparaît très bien à la figure 2, qui montre la configuration de la tête 50 par rapport à un crochet 3 à trois stades successifs A, B, C. La figure 3 correspond à la figure 2 et montre une autre vue des trois mêmes stades successifs A, B, C. En passant de A à B, on voit que la tête 50 abaisse l'extrémité 30d du crochet 3 puis que, en C, ladite extrémité s'est relevée derrière la tête 50 et pénètre dans l'évidement 505 pour accrocher le fil 4.

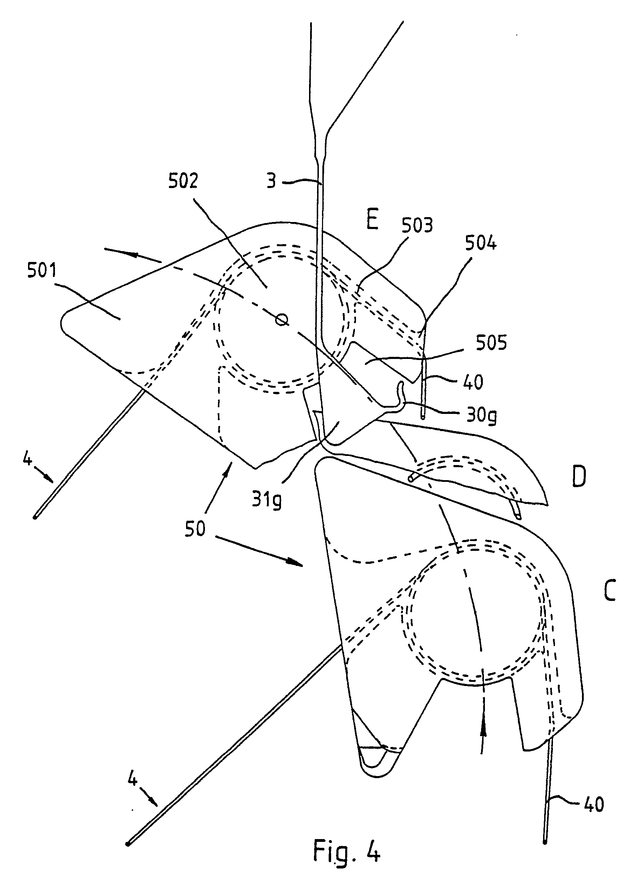

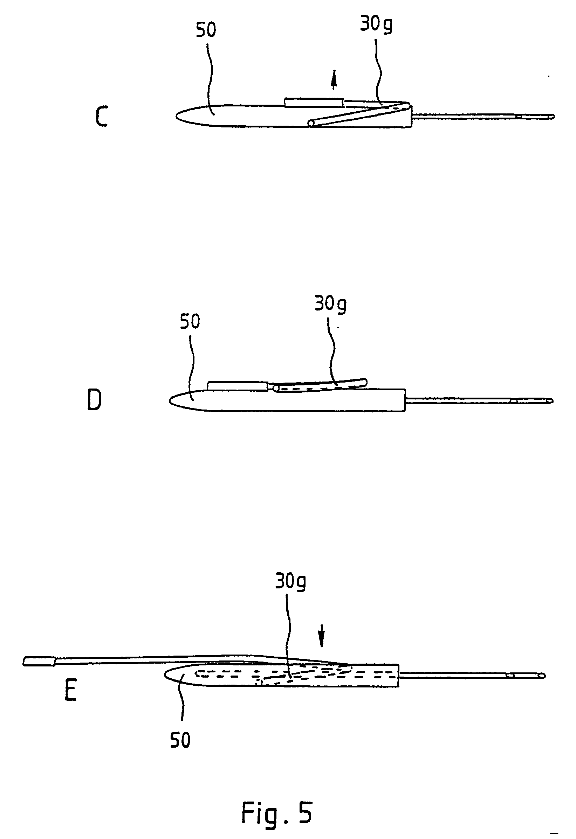

L'accrochage du côté gauche est décrit avec les figures 4 et 5. On y voit aussi trois stades successifs C, D, E : de façon analogue, la tête écarte d'abord l'extrémité 30 g du crochet 3 (C → D) par appui progressif grâce à la patte 31 g, puis ladite extrémité 30 g pénètre dans l'évidement 505 où elle peut accrocher et retenir le fil 4 entraîné par la tête 50.

Les moyens de retenue décrits comportent un seul crochet 3 par levier 2 parce que l'appareil décrit est conçu pour réaliser un retournement des fils 4 autour d'une tringle. On utilise l'appareil selon le procédé suivant : le fil 4 ayant été accroché à tous les crochets 3, formant deux fois plus de tronçons de fil 4 qu'il n'y a de crochets 3 dans une couronne 1, on rabat tous les tronçons sur et autour d'un noyau, jusqu'à ce que lesdits crochets soient à une position radiale au moins un peu inférieure au rayon de retournement autour de la future tringle, puis, de part et d'autre du noyau axialement à l'extérieur des fils, on installe une tringle, ensuite on relève les crochets 3 tout en déplaçant les tringles axialement vers le noyau, et en maintenant les fils 4 tendus, jusqu'à appliquer l'ensemble, c'est-à-dire les tringles et les crochets 3 maintenant les fils 4, contre le noyau.

Il est avantageux de réaliser un retournement que l'on qualifie de haut, c'est-à-dire qui amène les extrémités des tronçons de fil 4, supportées par les crochets 3, au dessus des épaules du futur pneumatique, donc sous la bande de roulement. De cette façon, on divise par deux le nombre de moyens de retenue nécessaires, et donc de leviers 2 nécessaires, pour un nombre donné de fils 4 présents dans chaque flanc, nombre dicté par la résistance mécanique que l'on doit conférer au pneumatique. Dans ce cas bien sûr, la longueur de chaque tronçon de fil 4 est d'autant plus importante, et donc l'écart de départ entre les deux couronnes 1 de moyens de retenue est très important. Les moyens de présentation décrits s'accommodent fort bien d'un écart très grand entre les couronnes 1.

## Revendications

1. Appareil de fabrication d'un renforcement pour pneumatiques, ledit renforcement étant constitué à partir d'un seul fil, ledit appareil étant du type comportant deux couronnes (1) coaxiales de leviers (2) dont l'extrémité porte des moyens de retenue (3) du fil, et comportant les moyens de présentation (5) du fil (4) auxdits moyens de retenue (3), caractérisé en ce que lesdits moyens de présentation (5) comportent une tête de présentation (50) accrochée à un brin flexible sans fin, ledit brin étant monté sur au moins deux roues de guidage dont l'axe de rotation est perpendiculaire à l'axe des couronnes, lesdites roues de guidage étant disposées au voisinage des moyens de retenue (3), et en ce qu'ils comportent un orifice (53) amenant ledit fil (4) sensiblement dans le plan dudit brin.

2. Appareil selon la revendication 1, caractérisé en ce que ledit brin est également monté sur une poulie de tension (52) permettant de faire varier l'écartement entre les roues de guidage.

3. Appareil selon la revendication 1 ou 2, caractérisé en ce que ledit brin est une courroie crantée (55).

4. Appareil selon l'une des revendication 1 à 3, caractérisé en ce que ladite tête (50) comporte, d'avant en arrière par référence à son déplacement imposé par ledit brin, une pointe (501), une poulie de renvoi (502), puis une buse (503) éloignant de ladite poulie de renvoi (502) l'extrémité (504) où le fil (4) est libéré de la tête (50), de façon à créer un évidement (505) entre la poulie de renvoi (502) et le brin (40) de fil (4) quittant la tête de présentation (50).

5. Appareil selon l'une des revendications 1 à 4, caractérisé en ce que ledit orifice (53) d'amenée du fil est situé à l'intérieur de la boucle formée par ledit brin.

6. Appareil selon la revendication 3, caractérisé en ce que la courroie crantée (55) est renforcée, de part et d'autre de la tête (50), sur une longueur correspondant à l'écartement entre les poulies de guidage (51).

7. Appareil selon la revendication 6, caractérisé en ce que la courroie crantée (55) est renforcée par un feuillard plié en zig-zag.

## Patentansprüche

1. Vorrichtung zur Herstellung einer Luftreifenhüllenverstärkung, die ausgehend von einem einzigen Faden hergestellt wird, wobei die Vorrichtung von dem Typ ist, der zwei koaxiale Kränze (1) von Hebeln (2) aufweist, deren Enden Haltemittel (3) für den Faden aufweisen und wobei Darbietungsmittel (5) des Fadens (4) für die Haltemittel (3) vorgesehen sind, dadurch gekennzeichnet, daß die Darbietungsmittel (5) einen Darbietungskopf (50) aufweisen, der auf einem endlosen flexiblen Band angeordnet ist, wobei das Band auf zumindest zwei Führungsrollen angeordnet ist, deren Drehachse rechtwinkelig zur Achse der Kränze verläuft und wobei die Führungsrollen den Haltemitteln (3) benachbart angeordnet sind und dadurch, daß eine Öffnung (53) vorgesehen ist, die den Faden (4) im wesentlichen in der Ebene des Bandes führt.

2. Vorrichtung nach Anspruch 1, dadurch gekennzeichnet, daß das Band auch über eine Spannrolle (52) läuft, die es erlaubt, den Abstand zwischen den Führungsrollen zu verändern.

3. Vorrichtung nach Anspruch 1 oder 2, dadurch gekennzeichnet, daß das Band ein Zahnriemen (55) ist.

4. Vorrichtung nach einem der Ansprüche 1 bis 3, dadurch gekennzeichnet, daß der Kopf (50) von vorne nach hinten unter Bezugnahme auf seine Bewegung, die ihm vom Band vermittelt wird, eine Spitze (501), eine Aufnahmerolle (502), dann eine Düse (503), die sich von der Aufnahmerolle (503) zum Ende (504) erstreckt, wo der Faden (4) vom Kopf (50) abgegeben wird, aufweist, wobei der Kopf so ausgebildet ist, daß er eine Ausnehmung (505) zwischen der Aufnahmerolle (502) und dem Trum (40) des den Darbietungskopf (50) verlassenden Fadens (4) bildet.

5. Vorrichtung nach einem der Ansprüche 1 bis 4, dadurch gekennzeichnet, daß die Abgabeöffnung (53) für den Faden im Inneren der durch das Band gebildeten Schleife angeordnet ist.

6. Vorrichtung nach Anspruch 3, dadurch gekennzeichnet, daß der Zahnriemen (55) zu beiden Seiten des Kopfes (50) auf einer Länge, die dem Abstand zwischen den Führungsrollen (51) entspricht, verstärkt ist.

7. Vorrichtung nach Anspruch 6, dadurch gekennzeichnet, daß der Zahnriemen (55) durch ein zick-zack-förmig gefaltetes Band verstärkt ist.

## Claims

1. An apparatus for the manufacture of a reinforcement for tires, said reinforcement being formed from a single thread, the said apparatuz being of the type having two coaxial crowns (1) of levers (2) the end of which bears means (3) for the retaining of the thread and comprising the means (5) of presenting the thread (4) to said retaining means (3), characterized by the fact that said presentation means (5) have a presentation head (50) hooked to an endless flexible strand, said strand being mounted on at least two guide wheels the axis of rotation of which is perpendicular to the axis of the crowns, said guide wheels being arranged in the vinicity of the retaining means (3), and by the fact that they comprise an orifice (53) conducting said thread (4) substantially in the plane of said strand.

2. An apparatus according to Claim 1, characterized by the fact that said strand is also mounted on a tension pulley (52) which makes it possible to vary the distance between the guide wheels.

3. An apparatus according to Claim 1 or 2, characterized by the fact that said strand is a notched belt (55).

4. An apparatus according to any of Claims 1 to 3, characterized by the fact that the said head (50) comprises from front to rear with reference to the displacement thereof imposed by said strand, a point (501), a return pulley (502), thereupon a nozzle (503) which moves the end (504) where the thread (4) is freed from the head (50), away from the said return pulley (502), so as to create a recess (505) between the return pulley (502) and the strand (40) of thread (4) leaving the presentation head (50).

5. An apparatus according to any of Claims 1 to 4, characterized by the fact that the said feed orifice (53) of the thread is located on the inside of said loop formed by said strand.

6. An apparatus according to Claim 3, characterized by the fact that the notched belt (55) is reinforced on both sides of the head (50) over a length corresponding to the distance between the guide pulleys (51).

7. An apparatus according to Claim 6, characterized by the fact that the notched belt (55) is reinforced by a strap which is folded in zig-zag shape.

Fig.1

EP 0 353 511 B1

Fig. 2

Fig. 3

Fig. 4

C

50    30g

D

50    30g

E    30g

50

Fig. 5

Fig. 6